(19) Europäisches Patentamt
European Patent Office
Office européen des brevets

(11) **EP 2 275 993 A2**

(12) **EUROPEAN PATENT APPLICATION**

(43) Date of publication:
**19.01.2011 Bulletin 2011/03**

(51) Int Cl.:
*G06T 15/40* (2011.01)

(21) Application number: **10169371.1**

(22) Date of filing: **13.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **14.07.2009 EP 09009168**

(71) Applicant: **SIEMENS AKTIENGESELLSCHAFT**
**80333 München (DE)**

(72) Inventors:
• **Eidenberger, Robert**
  **4040, Lichtenberg (AT)**
• **Zöllner, Raoul Daniel**
  **74076, Heilbronn (DE)**

(54) **Method for estimating the visibility of features on surfaces of object instances in multi-object scenes and method for perception planning in multi-object scenes**

(57)     The invention relates to a method for estimating the visibility of features on surfaces of object instances in multi-object scenes with an unknown number of object instances by a sensor from a current viewpoint, wherein pose uncertainties of each object instance are modelled by individual probability distributions, comprising the steps of:
- drawing samples from prior beliefs of object instance distributions, wherein each sample describes a set of states containing one state of each object instance,
and based on the drawn samples:
- view frustum culling in order to identify object instances outside a detection range of the sensor, wherein these object instances will not be considered for further processing,
- identifying all invisible features due to the object instances' geometries and poses,
- estimating object relations, determining occlusions of an object instance caused by other object instances based on the estimated object relations and identifying all invisible features due to the determined occlusions.

By considering object relations real and predictive measurements are more realistic and accurate. The inventive method is usable for active perception, e.g. for service robots.

FIG 1

**Description**

The invention relates to a method for estimating the visibility of features on surfaces of object instances in multi-object scenes, to a method for perception planning in multi-object scenes, to an active perception framework ant to an autonomous service robot.

The research in active perception brought up very sophisticated approaches for viewpoint evaluation and next best view planning. Such approaches are disclosed in J. Denzler et al.: "Information theoretic sensor data selection for active object recognition and state estimation", IEEE Transactions on Pattern Analysis and Machine Intelligence, vol. 24, pp. 145-157, 2002; J. Vogel et al.: "Target-directed attention: sequential decision-making for gaze-planning", International Conference on Robotics Automation, 2008, M. Chli et al.: " Active matching", European Conference on Computer Vision, 2008; and K. Deguchi et al.: " An information theoretic approach for active and effective object recognitions", International Conference on Pattern Recognition, vol. 2, p. 622, 2006. These works vary in their methods of evaluating sensor positions, in the strategies for action planning and in their field of application. They mainly aim on fast and efficient object recognition of similar and ambiguous objects, but do not cope with multi-object scenarios and cluttered environments.

R. Eidenberger et al: "Fast parametric viewpoint estimation for active object detection", Proceedings of the IEEE International Conference on Multisensor Fusion and Integration for Intelligent systems, 2008, and R. Eidenberger et al.: "Probabilistic action planning for active scene modelling in continuous high-dimensional domains", Proceedings of the IEEE International Conference on Robotics and Automation, 2009, describe an active perception planning approach for a service robot which reaches applicability to high dimensional state spaces, quick computation and efficient planning strategy. However, as in most other approaches in literature only single object scenes have been considered. As a matter of fact in natural, realistic scenarios the constraint of considering solitary items only does not hold. Quite the contrary in household environments mostly arrangements of different or alike objects, such as food, furniture, dishes et cetera are found. Consequently you have to seek for a service robot which is able to detect and interpret multi object constellations both for perception and manipulation.

The occurring problem of object occlusion is treated by Ercan et al.: "Camera network node selection for target localization in the presence of occlusions", SENSYS Workshop on Distributed Smart Cameras, October 2006, by considering static and dynamic occluder objects. However the object poses are not modeled probabilistically, so the problem is solved by applying common algorithms from computer graphics.

Koostra et al.: "Active exploration and keypoint clustering for object recognition", IEEE, 2008 approach the cluttered scene problem by keypoint clustering of interest points from very robust feature detectors, which allows feasible detection of strongly occluded objects. Hence, they avoid to model occlusions explicitly and rely on the robustness of the detector.

In P.-E. Forssen et al.: " Informed visual search: Combining attention and object recognition", 2008, pp. 935-942, object recognition is combined with an attention mechanism for occlusion avoidance to efficiently acquire scene information. This approach targets on rapidly identifying objects in cluttered environments, but does not model pose uncertainties.

For multi-object tracking the probabilistic comprehension of occlusion seems more relevant than in current active systems. O. Lanz: "Occlusion robust tracking of multiple objects", International Conference on Computer Vision and Graphics, 2004, describes a Bayesian framework for robust multi-object tracking under the presence of occlusions. He takes into account the object visibility for computing the observation likelihood by analyzing each image pixel.

T. Tamminen et al.: "A bayesian occlusion model for sequential object matching", Proceedings of the British Machine Vision Conference, 2004, pp. 547-556, presents a similar approach for face recognition. The probabilistic representation by inverse-Wishart functions induces great computational costs and outweighs the advantages of the occlusion model.

Gupta et al.: "An approach for camera selection and multi-object inference ordering in dynamic scenes", Proceedings of the International Conference on Computer Vision, pp. 1-8, 2007, describe a very fast and resource effective vision system for people part tracking. They use a heuristic for probabilistically determining body occlusions which is calculated from the number of visible voxels. This approach does not convince due to the discretization of space.

In general, known perception approaches do not explicitly address the occlusion of one object by another. Most approaches which claim to be capable of dealing with occlusions are in fact applying occlusion robust detection algorithms. Although these known approaches may seem reasonable in simple scenarios they are inapplicable in more complex scenarios containing various items, henceforward called object instances, of alike or different object classes, wherein all different, initially known classes establish an object database.

It is an object of the present invention to specify an improved method for estimating the visibility of features on surfaces of several items, henceforward called object instances, in multi-object scenes with an unknown number of object instances by a sensor from a current viewpoint.

It is a further object of the present invention to specify an improved method for perception planning in multi-object scenes with an unknown number of object instances.

The object is achieved by methods in accordance with the independent claims.

Accordingly, the inventive method for estimating the visibility of features on surfaces of object instances in multi-object scenes with an unknown number of object instances by a sensor from a current viewpoint, wherein pose uncertainties of each object instance are modelled by individual probability distributions, comprises the following steps:

- drawing samples from prior beliefs of object instance distributions, wherein each sample describes a set of states containing one state of each object instance,
  and based on the drawn samples:
- view frustum culling in order to identify object instances outside a detection range of the sensor, wherein these object instances will not be considered for further processing,
- identifying all invisible features due to the object instances' geometries and poses,
- estimating object relations, determining occlusions of an object instance caused by other object instances based on the estimated object relations and identifying all invisible features due to the determined occlusions.

The method according to the present invention is based on the processing and enhancement of sensor date by incorporating current world knowledge. The term "current world knowledge" is to be understood as state distributions of object hypotheses and their mutual relations and influences. By considering object relations real and predictive measurements are more realistic and accurate.

In a preferred embodiment the step of identifying all invisible features due to the object instances' geometries and poses comprises executing the following methods:

- identifying features at the back side of the object instances, which point away from the sensor, by checking a direction vector of the feature,
- identifying of features with a z-location of their centre behind the sensor and
- identifying features, although pointing towards the sensor, being outside a visibility volume of the sensor by checking conic view frustums of the sensor and the feature.

In a further preferred embodiment the step of estimating object relations, determining occlusions and identifying invisible features due to the determined occlusions comprises the sub-steps of:

- sorting spatially the object instances with reference to a distance of an origin of the object instance from the sensor,
- selecting all possible occluder objects for each object instance from the sorted object instances,
- comparing each object instance's polygon with each occluder's polygon for an intersection, wherein an intersection means that the object instances occlude each other,
- projecting the features of the hindmost object instance to a projection plane, if an intersection is determined,
- considering features lying within a polygon intersection area as to be occluded.

The inventive method for perception planning in multi-object scenes with an unknown number of object instances comprises the steps of:

- estimating the visibility of features on surfaces of the object instances by a sensor from a current viewpoint according to one of claims 1 to 3, and
- planning control actions, in particular sensor parameter adaptations or viewpoint changes, under consideration of the estimated visibility.

In order to perform perceptions, new sensor positions or sensor parameters are planned based on the current state knowledge. Assuming uncertain world knowledge object relations based on their geometries and features are determined probabilistically. Control actions such as the sensor parameter adaptation or viewpoint changes are optimized under consideration of these relations. This enables more efficient target oriented object recognition. The more realistic action prediction allows more efficient and reasonable action planning. The resulting advantages are the minimization of costs (e.g. computational resources and runtime) for scene acquisition tasks, as usually few actions are required for a successful task completion. Resource and runtime efficient strategies enable fast and autonomous reactions to occurring detection problems. Furthermore, misleading strategies can be avoided.

Furthermore the invention comprises an active perception framework comprising an active perception module performing an inventive method and an autonomous service robot comprising such an active perception framework.

Further features and advantages of the present invention result from the following description of preferred embodiments of the invention, which will now be described with reference to the drawings.

Brief description of the drawings:

Fig. 1          shows a schematic block diagram of an inventive active perception framework,

Fig. 2          shows a schematic flow chart of an inventive Occlusion estimation method,

Fig. 3          shows an exemplary multi-object scene with two object instances,

Fig. 4          shows a drawn sample from probability distributions of the object instances according to fig. 3,

Fig. 5          shows bounding boxes of the two-object scene according to fig. 3,

Fig. 6          shows a perspective projection of the sample object instances,

Fig. 7          shows bounding polygons of the sample object instances in a projection plane,

Fig. 8          shows an occlusion event with the polygons according to fig. 7,

Fig. 9          shows a further exemplary multi-object scene,

Fig. 10         shows an arrangement of possible viewpoints for a sensor in order to actively percept the scene according to fig. 9,

Fig. 11A-11D    show detection results of an action sequence resulting from a proposed planning approach, and

Fig. 12         shows a table listing costs, values and rewards in each detection step of all actions.

Detailed description

A multi-object scene consists of several object instances. The number of instances is unknown. Each item instantiates an object class and all different, initially known classes establish an object database. Thus a realistic scenario contains various object instances of alike or different object classes. The aim is to achieve a probabilistic modeling of such multi-object scenes and correctly associate measurements with their corresponding object instances. Based on this probabilistic model a measurement model which does not estimate object class and pose from sensing data only but also by incorporating scene knowledge, such as in particular object occlusions, has to be described. From these object relations expected visible (and also invisible) features can be predicted and used for improving measurement results. The proposed concept for occlusion consideration is applied for both the real measurement and the observation prediction for perception planning.

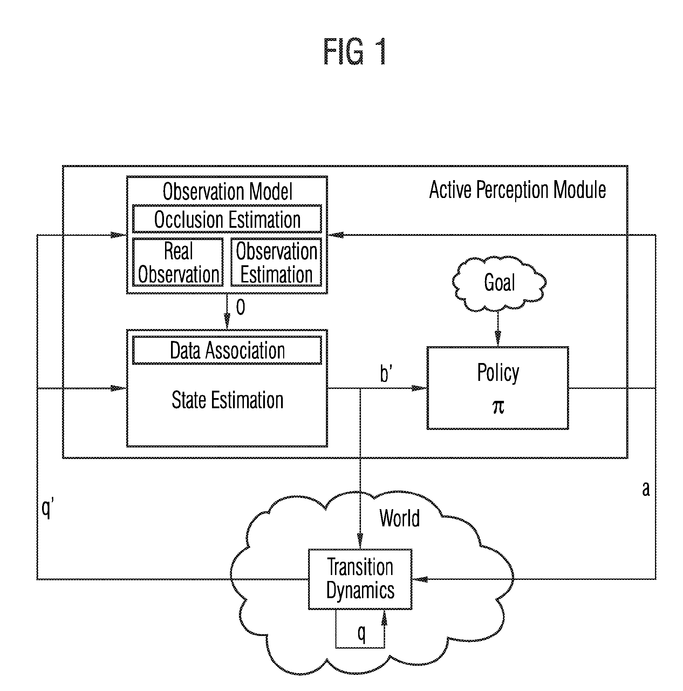

In active perception the aim is to choose control actions $a \in A$ to reach a specific goal g. There is a wide range of different actions, largely depending on the application. In the following only sensor positioning at different viewpoints is considered as sensing actions and sensor parameter adjustments are neglected. The framework for selecting the best prospective action policy $\pi$ is schematically illustrated in Figure 1.

In order to find an optimal action policy $\pi$ a sequence of prospective actions and observations has to be evaluated. Decision making bases on the costs of the executed action and the reward from the expected belief b(q'), which denotes the conditional probability distribution over the state q', given a sequence of measurements. State estimation determines this belief distribution by updating the initial distribution by incorporating an observation O. An observation model provides the measurement data for state estimation. The expected observation O is predicted from the chosen sensing action and the state distribution after the transition update. For more accurate observation prediction, object occlusions in the multi-object scenarios are estimated.

The following sections depict the probabilistic modelling of multi-object scenes and the Bayesian statistical framework including observation association for state estimation. Also the observation model under consideration of occlusion estimation and probabilistic action planning are explained in detail.

Multi-object scene modelling

A single object instance $\tau$ with $0 \leq \tau \leq I$ is considered, where I denotes the temporary total number of object

instances. Let $b^\tau(q)$ be the belief distribution of item $\tau$ over the object state q = $(C_i, \phi^T)^T$, which is a tupel containing the discrete class representation $C_i$ and its continuous m-dimensional pose $\phi = (\phi_1, ..., \phi_m)^T$ with $\phi \in R^m$. $C_i$ is element of the set of object models $(C_0, C_1, ..., C_c)$, which establish the object database C, containing all c different and initially known object classes and a rejection class $C_0$.

Hence the uncertainty of each object instance is modeled by individual probability distributions. As each belief distribution integrates to one all items would be equal in its probability mass. To allow assigning different weights to object instance distributions to express the certainty of which this distribution in fact corresponds to an item or not we introduce the rejection class $C_0$. Assigning weights to this class reduces the probability mass of the other object classes and decreases the occurrence probability of this object instance.

In order to consider the total probabilistic scene b(q) is introduced as the set of all instance distributions $b^1(q)$. Note that b(q) is no probability distribution after all, but a conjunction of distributions.

State estimation and data association

This embodiment uses a Bayesian state estimator as introduced by R. Eidenberger et al.: "Probabilistic action planning for active scene modelling in continuous high-dimensional domains", Proceedings of the IEEE International Conference on Robotics and Automation, 2009, and considers uncertainties in the state transition and in the measurement for state estimation. The probability distribution over the state

$$ b_{t-1}^t(q) = p^t(q \mid O_{t-1}(a_{t-1}),...,O_0(a_0)) \tag{1} $$

is stated as the a priori belief of the object instance $\tau$ for previous sensor measurements $O_{t-1}$ ($a_{t-1}$ ,...., $O_0$ ($a_0$). Applying an action with its state transition probability $p_a(q' \mid q)$, which contains the inaccuracies resulting from robot actions, leads to the probabilistic model for the prediction update

$$ p_a^t(q' \mid O_{t-1}(a_{t-1}),...,O_0(a_0)) = \int_q b_{t-1}^t(q) p_a(q' \mid q) dq . \tag{2} $$

The posterior distribution $b_t^\tau(q')$ is calculated according to Bayes' rule by updating the prediction update with the new observation $O_t(a_t)$ for each object instance.

$$ b_t^t(q') = p^t(q' \mid O_t(a_t),...,O_0(a_0)) = \frac{P^t(O_t(a_t) \mid q') p_a^i(q' \mid O_{t-1}(a_{t-1}),...,O_0(a_0))}{P^t(O_t(a_t),...,O_0(a_0)} \tag{3} $$

The evidence term $P^\tau(O_t(a_t),...,O_0(a_0))$ is determined by integrating over the state distribution applying the theorem of total probability

$$ P^t(O_t(a_t),...,O_0(a_0)) = \int_{q'} P^t(O_t(a_t) \mid q') p_a^t(q' \mid O_{t-1}(a_{t-1}),...,O_0(a_0)) dq' . \tag{4} $$

The actual measurement model provides the total measurement likelihood $P(O_t(a_t) \mid q')$.

In this embodiment all probability distributions, including this likelihood, are represented as multivariate Gaussian mixtures. The ability to describe multifaceted, multi-peaked distributions and their suitability to high dimensional state space due to its parametric computation are favorable.

The measurement likelihood $P((O_t(a_t) \mid q')$ contains i Gaussian mixture components describing the observation, but does not possess the desired information about the object instance categorization.

Thus, this input data is associated with the corresponding object instances, which the probability distribution needs to be fused with. We split up the complex measurement likelihood distribution to simple, single peaked components

$$P(O_t(a_t) \mid q') = \sum_i P^i(O_t(a_t) \mid q') \qquad (5)$$

with $P^i(O_t(a_t) \mid q') = N(w_i, \mu_i, \Sigma_i)$. Weight $w_i$, mean $\mu_i$ and covariance $\Sigma_i$ are the parameters of the Gaussian kernel. Each component is compared with each object instance prior distribution by applying the Mahalanobis-distance measure

$$d = \sqrt{(\mu_1 - \mu_2)^T (\Sigma_1 + \Sigma_2)^{-1} (\mu_1 - \mu_2)} \qquad (6)$$

on both distributions. The similarity is defined by a specific threshold dependent on the object class' geometry.

When two distributions are considered to be similar $P^\tau(O_t(a_t) \mid q')$ is set to $P^i(O_t(a_t) \mid q')$ (or added to it if already one component was assigned before). If a component i cannot be associated with any object instance distribution a new object instance I + 1 has been found and its distribution is assigned to a new object instance measurement $P^{I+1}(O_t(a_t) \mid q')$. The corresponding prior distribution for the Bayes update is assumed to be uniformly distributed. The associated object instance likelihoods are used for the Bayes' update in Equation (3).

Occlusion estimation in the observation model

Generally the observation model is wanted to estimate the observation likelihood $P(O_t(a_t) \mid q')$ for the current measurement $O_t(a_t)$. Under the assumption of using interest point detectors this observation can be expressed as the detection of a set of N features

$$O_t(a_t) = \{ f_1(a_t), \dots, f_N(a_t) \}, \qquad (7)$$

as a subset of all database features. These features are considered to be the currently visible interest points.

This set of features is generated explicitly when predicting an observation, where the measurement is simulated. Feature characteristics and occlusion events are considered. While for a real measurement the set of features is acquired directly from the detector, during the simulation of the observation the visibility of a feature j is estimated from its occurrence likelihood $P(f_j(a_t))$. For determining the feature's visibility the pose distribution of the object instance, which the feature belongs to, is of importance. In order to compute the probabilistic visibility S samples from the prior beliefs $b_{t-1}(q)$ of the object instance distributions are drawn. Each sample describes a set of states $q_s$ containing one state $q_s^t$ of each instance. Thus, the sample state $q_s$ can be interpreted as one specific object constellation. For this state $P_s(f_j(a_t) \mid q)$ is calculated taking into account the view frustums of the sensor and the features, features on back faces, and possible object occlusions. Adding up the likelihoods over all samples leads to

$$P(f_j(a_t)) \sim \frac{\sum_{s=1}^{S} P_s(f_j(a_t) \mid q_k)}{S}, \qquad (8)$$

which states an approximation for the probability that feature $f_j(a_t)$ is visible from viewpoint $a_t$.

Now, given the set of expected visible features, $P(O_t(a_t) \mid q')$ is computed by applying the naive Bayes rule and assuming the features to be conditionally independent:

$$P(O_t(a_t) \mid q') = \prod_j^{N} P(f_j(a_t) \mid q'). \qquad (9)$$

Perception planning

The probabilistic planning concept in form of a partially observable Markov decision process, as proposed in R. Eidenberger et al.: "Probabilistic action planning for active scene modelling in continuous high-dimensional domains", Proceedings of the IEEE International Conference on Robotics and Automation, 2009, is used for finding optimal action policies. Due to real-time constraints and the fact that performing an observation usually greatly influences the beliefs and makes proposed policies obsolete, this concept is slightly simplified to the 1-horizon planning strategy:

$$\pi(b) = \arg\max_{a} R_a(b) \qquad\qquad (10)$$

The prospective action policy $\pi$ is determined by maximizing the expected reward

$$R_a(b) = \begin{cases} \int r_a(b)b(q)dq & \text{if } t < T \\ \alpha h_b(q' \mid O_t(a_t)) & \text{if } t = T \end{cases} \qquad\qquad (11)$$

by applying a Greedy-technique to propose the control action to execute, b is an abbreviation of b(q). The factor $\alpha$ relates the value of information and the sensing costs. The reward $R_a(b)$ for executing action a in state q' is calculated by comparing the sensing costs $r_a(b)$ for consecutively moving the sensing device with the quality of the belief distribution after incorporating an observation, which is performed at time T. In order to determine this quality the information theoretic measure of the differential entropy $h_b(q' \mid O_t(a_t))$ of the estimated belief distribution is used. Equation (3) describes the calculation of the belief distribution for each object instance. For evaluating the entire scenario the entropy over all objects instances is acquired by summing up the individual entropies

$$h_b(q' \mid O_t(a_t)) = \sum_{t} h_{b^i}(q' \mid O_t(a_t)) \qquad\qquad (12)$$

As the number of object instances remains constant for all sensing actions during planning, this summation is justified.

Realization of the probabilistic framework

This section details the basic concepts of state and occlusion estimation and describes how uncertainties are modeled and used in a robotic scenario.

Transition uncertainty in state estimation

Transition uncertainty is defined as the linear Gaussian K

$$p_a^t(q' \mid q) = \sum_{k=1}^{K} w_k \mathrm{N}(q \mid \mu_k + \Delta(a), \sum_k(a)) \qquad\qquad (13)$$

with Gaussian kernels equal in the number of components and mean values to the belief distribution. $\Delta(a)$ indicates the change in the state dependent on the action with the covariance $\Sigma_k(a)$.

Uncertainties in the observation model

In this embodiment we a stereo camera system and the SIFT-detection algorithm (see D.G. Lowe: "Object recognition from local scale-invariant features", International Conference on Computer Vision, pp. 1150-1157, 1999) for object recognition is used. In an offline process the object database is build by acquiring 396 images of each object from different viewing angles. All interest points are calculated from this data. In contrast to the approaches in R. Eidenberger et al: "Fast parametric viewpoint estimation for active object detection", Proceedings of the IEEE International Conference on Multisensor Fusion and Integration for Intelligent systems, 2008, and R. Eidenberger et al.: "Probabilistic action planning for active scene modelling in continuous high-dimensional domains", Proceedings of the IEEE International Conference on Robotics and Automation, 2009, not each interest point is considered separately, but a more abstract representation is used. All features are clustered from one view to a single, more abstract feature. Thus a far less number of total features are got at the drawback of a loss of geometric information and restrictions in the ability of differentiating between ambiguous objects. This simplification helps for comprehensibility but does not restrict the occlusion estimation process.

The measurement model provides $P(O_t(a_t) \mid q')$ as a mixture distribution for the state update. The mean values of the measurement distribution are determined from the stereo matching algorithm on the basis of feature correspondences (see T. Grundmann et al.: "Integration of 6d object localization and obstacle detection for collision free robotic manipulation", Proceedings of the IEEE International Symposium on System Integration, 2008). The uncertainties result from relations between seen and expected interest points, matching errors and sensor and feature characteristics.

Probabilistic occlusion estimation

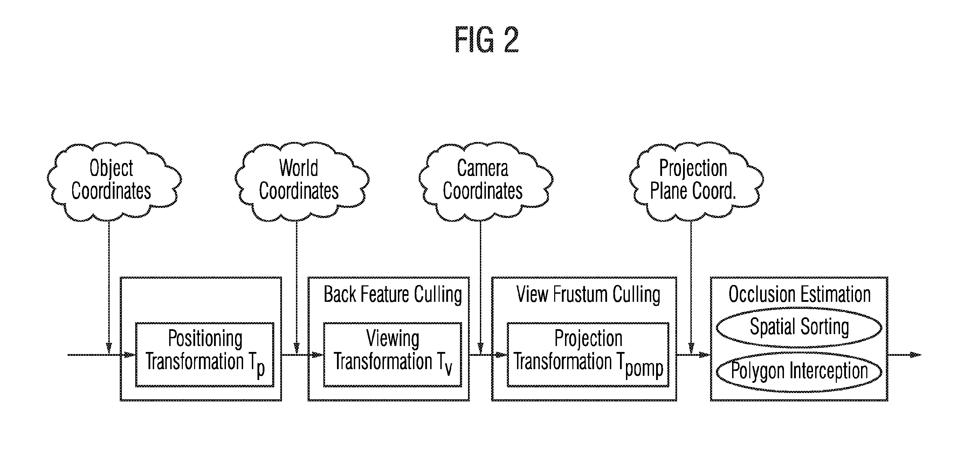

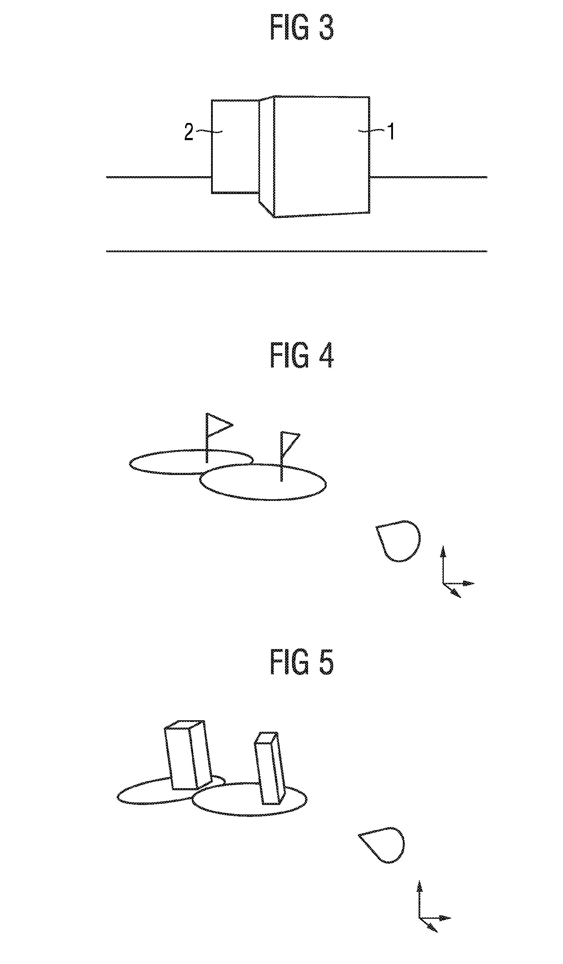

The proposed analysis of feature visibility follows a 5-step algorithm illustrated in Figure 2. It is demonstrated on the example of a two-object constellation consisting of a first object 1 and a second object 2 pictured in Figure 3.

1) Initially when drawing a sample from all object instance distributions $b_{t-1}(q)$ we get a state $q_s^t$ for each object instance. From the object instance class $C^\tau$ the object geometry, such as the bounding box, and the set of surface features are acquired from the corresponding data base object. All geometric data is given with respect to the object instance's origin.

2) In order to represent all instances within one coordinate reference frame the position transform $T_p$ is applied to transfer all items into world coordinates. The pose <f>L specifies the sample location. Figure 4 shows the drawn sample from the probability distributions, figure 5 pictures the bounding boxes of the two-object scene.

3) The viewing transformation $T_V$ transforms features and bounding boxes into camera coordinates. In the first stage of visibility analysis back feature culling is accomplished by determining the feature visibility due to the object instance's pose. It aims on identifying all invisible features by executing following methods:

- Feature at the back side of the object, which point away from the sensor, are identified by checking the direction vector of the feature. These are considered to be undetectable.
- Features with a z-location of their centre behind the camera are eliminated due to their invisibility.
- To find out if a feature, although pointing towards the sensor, is outside its visibility volume, the conic view frustums of the sensor and the feature are checked. Both have to lay within the others visibility cone.

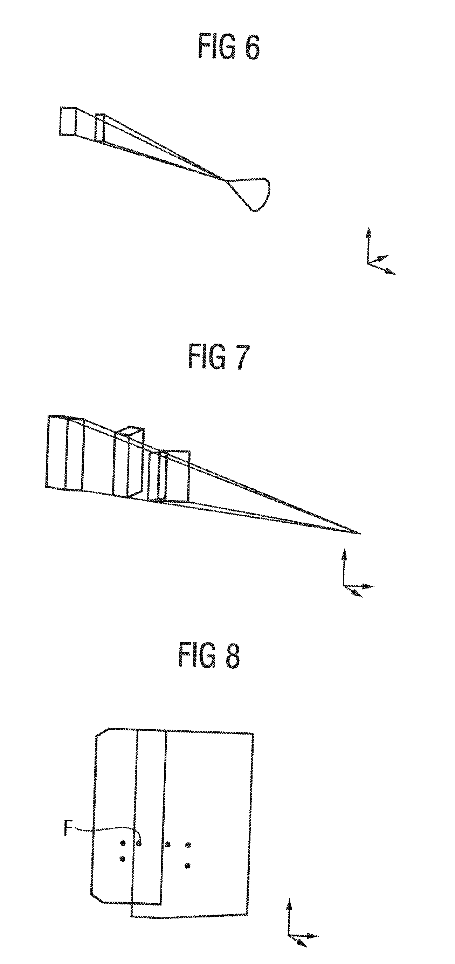

4) In the sequencing projection transformation step the object bounding boxes are transformed into a 2-dimensional projection plane, which is clipped according to the sensor properties. This process is called view frustum culling. The transformation matrix of a perspective projection $T_{persp} = (n^TV)^T - (nV)I_4$ can be easily derived from the normal of the projection plane n and the current homogeneous viewpoint V with $I_4$ as the 4 x 4 identity matrix (see D. Marsh: "Applied Geometry for Computer Graphics and CAD, 2nd ed. Springer 2005). In J. D. Foley et al.: "Computer graphics: principles and practice, 2nd ed., Addison-Wesley, 1996, this matrix is expanded for clipping the scene by a pyramidal view volume in order to consider only bounding box vertices which are within the sensor range. The convex hull of the projected bounding box's vertices specifies the resulting, visible 2D bounding polygon. Figure 6 shows the perspective projection of the sample object instances, figure 7 illustrates the bounding polygons in the projection plane.

5) In previous steps the feature visibility due to its object's geometry was depicted. Now object occlusion in multi-object scenes which are caused by other object instances are dealt with. First the object instances are spatially sorted with reference to the distance of their origin from the sensor following methods such as depth-sort-algorithm and binary space partitioning. From this sorted object list all possible occluder objects are selected for each object instance. Each object's bounding polygon is compared with each occluder's polygon for an intersection by using boolean set operations. An intersection means that the objects occlude each other. In this case the features of the hindmost object are projected onto the projection plane. If a feature lies within the polygon intersection area it is considered to be occluded. The probability of the feature visibility is acquired from the percentage of the occluded feature area. Performing all occlusion checks leads to the probability distribution p(f) which describes the estimated likelihood of seeing a feature. Figure 8 pictures an occlusion event, wherein one feature F is occluded.

After performing the matrix multiplication chain

$T = T_{persp}T_v T_p$ occlusion estimation considers relations between objects in order to probabilistically determine the feature visibility. The number of samples required for determining occlusions is closely related to the shape of the respective probability distribution, the sample is drawn from.

Experimental results

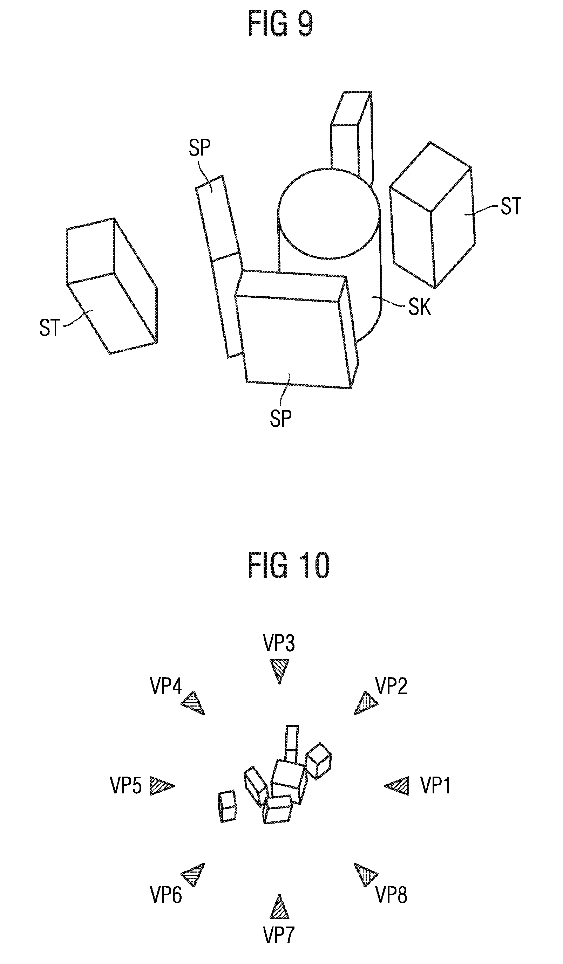

In an experiment the proposed approach is demonstrated with an environmental setup shown in Figure 9. The scenario consists of three different types of objects, a salt box ST, a soup box SP and a sauerkraut tin SK. The object database contains the object geometries and the SIFT interest points per view. The measurement model is to be assumed identical, both for the state update and the state prediction. The calculation of the measurement probability bases on simulated data in order to run through a great variety of observation sequences with varying outcomes for one scenario. The characteristics of the measurements are derived from real observation data.

In real measurements in the illustrated scenario the object poses and their average spreading were acquired. Additionally formulated a function $g_v(f_{total}) = k_v f_{total} + \delta_v$ for the coherence between the total number of interest points in a view $f_{total}$ and the number of consistent stereo matches $g_v(f_{total})$ in this view for a detection. The factor $k_v$ denotes the percentage of interest points which are detected on average. $\delta v$ describes additive Gaussian noise. This descriptions and the results of the occlusion estimation process are used for determining the object class probability and pose covariance in the simulated measurement model.

A sensing action is defined as a change in the robot's viewpoint. Figure 10 illustrates 8 different, circularly aligned control actions, which are evaluated in this experiment. The costs of the robot's movement to another viewpoint VP are derived from the movement angle. The costs for accomplishing a new observation without moving are set to 0.5 for the current viewpoint to avoid remaining at the same location at all times. The measurement reward is calculated according to Equation (12) from the entropy of the estimated distribution. The problem is assumed to be planar, so only locations in the xy-plane and rotations around the z-axis were considered for the sake of clarity.

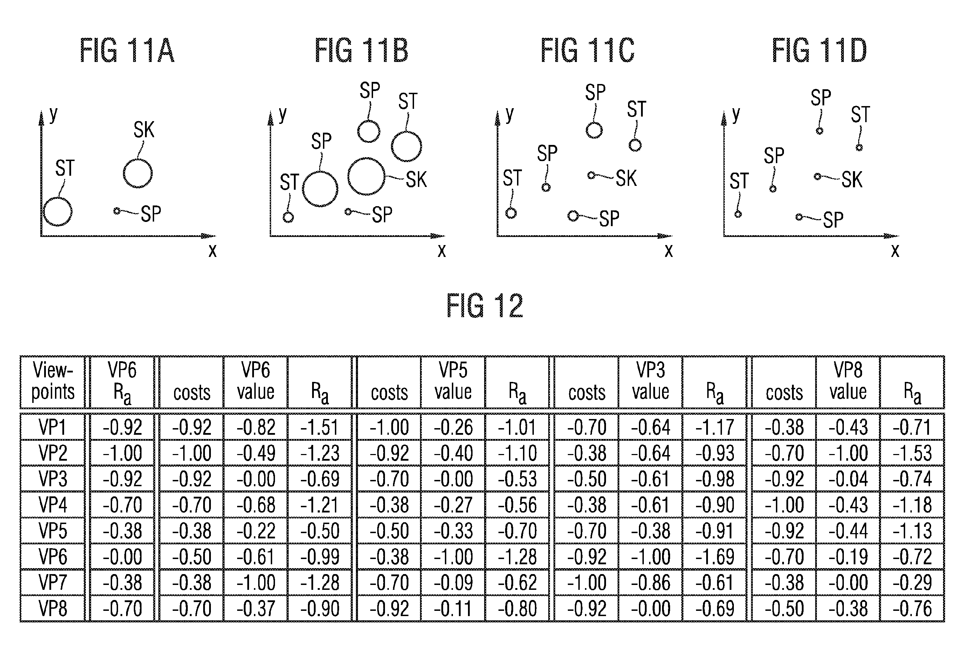

In the following an action sequence resulting from the proposed planning approach is presented. Figures 11A-11D show the detection result in each step. Figures 12 shows a table listing costs, values and rewards in each detection step of all actions.

As initially no scene knowledge is available, each action promises identical benefits. The first measurement from the current robot position is acquired, namely viewpoint 6. The measurement results (see Fig. 11A )with varying characteristics are associated and merged to three newly detected object instances. In Figure 11A the translational components of the uncertainty ellipsoids covering 97 percent of the probability mass are plotted. Based on the belief distributions viewpoint 5 is suggested for the prospective measurement (see Fig. 11B). Some single measurements of this sensing actions are associated with the already detected salt and soup box, leading to a significantly more certain pose. The sauerkraut can is not visible as being occluded by another, first-time found soup box. Hence the sauerkraut's uncertainty even grows due to the state transition inaccuracies. Two further new object instances are found in the background. The next planning step aims on optimizing all 6 belief distributions and makes the robot move to viewpoint 3 (see Fig. 11C). While most object instance poses are determined quite accurate, the uncertainty of the closest object instance's pose is hardly reduced. This is because only the small side of soup box is visible, which contains few interest points. Viewpoints close to the current do have similar expected rewards, viewpoint 8 outperforms these due its great value despite the costly movement. The resulting belief contains 6 well located object instances (see fig. 11D). As the specified accuracy is reached, the algorithm terminates.

This example shows only one possible action sequence for starting from viewpoint 6. Due to the modeled noise, measurements and predictions vary and lead to different strategies. It is not guaranteed that all object instances are found at all times, as the algorithm tries to reduce uncertainties of knows beliefs.

An active perception module for planning next best viewpoints in multi-object environments based on contrasting perception benefits and action costs was presented. This approach is embedded in a fully probabilistic framework and works in continuous high-dimensional domains. It considers object relations by a probabilistic representation of object occlusions for efficient decision making, wherein the reasoning process bases on present scene knowledge.

**Claims**

1.  Method for estimating the visibility of features on surfaces of object instances in multi-object scenes with an unknown number of object instances by a sensor from a current viewpoint, wherein pose uncertainties of each object instance are modelled by individual probability distributions, comprising the steps of:

    - drawing samples from prior beliefs of object instance distributions, wherein each sample describes a set of states containing one state of each object instance,
    and based on the drawn samples:
    - view frustum culling in order to identify object instances outside a detection range of the sensor, wherein these object instances will not be considered for further processing,
    - identifying all invisible features due to the object instances' geometries and poses,
    - estimating object relations, determining occlusions of an object instance caused by other object instances based on the estimated object relations and identifying all invisible features due to the determined occlusions.

2.  Method according to claim 1,
    wherein the step of identifying all invisible features due to the object instances' geometries and poses comprises executing the following methods:

    - identifying features at the back side of the object instances, which point away from the sensor, by checking a direction vector of the feature,
    - identifying of features with a z-location of their center behind the sensor and
    - identifying features, although pointing towards the sensor, being outside a visibility volume of the sensor by checking conic view frustums of the sensor and the feature.

3.  Method according to claims 1 or 2,
    wherein the step of estimating object relations, determining occlusions and identifying invisible features due to the determined occlusions comprises the sub-steps of:

    - sorting spatially the object instances with reference to a distance of an origin of the object instance from the sensor,
    - selecting all possible occluder objects for each object instance from the sorted object instances,
    - comparing each object instance's polygon with each occluder's polygon for an intersection, wherein an intersection means that the object instances occlude each other,
    - projecting the features of the hindmost object instance to a projection plane, if an intersection is determined,
    - considering features lying within a polygon intersection area as to be occluded.

4.  Method for perception planning in multi-object scenes with an unknown number of object instances, comprising the steps of:

    - estimating the visibility of features on surfaces of the object instances by a sensor from a current viewpoint according to one of claims 1 to 3, and
    - planning control actions, in particular sensor parameter adaptations or viewpoint changes, under consideration of the estimated visibility.

5.  Active perception framework comprising an active perception module performing a method according to one of claims 1 to 4.

6.  Autonomous service robot comprising an active perception framework according to claim 5.

# FIG 1

# FIG 2

EP 2 275 993 A2

Object Coordinates → Positioning Transformation $T_p$

World Coordinates → **Back Feature Culling** → Viewing Transformation $T_v$

Camera Coordinates → **View Frustum Culling** → Projection Transformation $T_{pomp}$

Projection Plane Coord. → **Occlusion Estimation**
- Spatial Sorting
- Polygon Interception

## FIG 3

## FIG 4

## FIG 5

## FIG 6

## FIG 7

## FIG 8

F

# FIG 9

# FIG 10

# FIG 11A

# FIG 11B

# FIG 11C

# FIG 11D

EP 2 275 993 A2

# FIG 12

| View-points | VP6 $R_a$ | costs | VP6 value | $R_a$ | costs | VP5 value | $R_a$ | costs | VP3 value | $R_a$ | costs | VP8 value | $R_a$ |
|---|---|---|---|---|---|---|---|---|---|---|---|---|---|
| VP1 | -0.92 | -0.92 | -0.82 | -1.51 | -1.00 | -0.26 | -1.01 | -0.70 | -0.64 | -1.17 | -0.38 | -0.43 | -0.71 |
| VP2 | -1.00 | -1.00 | -0.49 | -1.23 | -0.92 | -0.40 | -1.10 | -0.38 | -0.64 | -0.93 | -0.70 | -1.00 | -1.53 |
| VP3 | -0.92 | -0.92 | -0.00 | -0.69 | -0.70 | -0.00 | -0.53 | -0.50 | -0.61 | -0.98 | -0.92 | -0.04 | -0.74 |
| VP4 | -0.70 | -0.70 | -0.68 | -1.21 | -0.38 | -0.27 | -0.56 | -0.38 | -0.61 | -0.90 | -1.00 | -0.43 | -1.18 |
| VP5 | -0.38 | -0.38 | -0.22 | -0.50 | -0.50 | -0.33 | -0.70 | -0.70 | -0.38 | -0.91 | -0.92 | -0.44 | -1.13 |
| VP6 | -0.00 | -0.50 | -0.61 | -0.99 | -0.38 | -1.00 | -1.28 | -0.92 | -1.00 | -1.69 | -0.70 | -0.19 | -0.72 |
| VP7 | -0.38 | -0.38 | -1.00 | -1.28 | -0.70 | -0.09 | -0.62 | -1.00 | -0.86 | -0.61 | -0.38 | -0.00 | -0.29 |
| VP8 | -0.70 | -0.70 | -0.37 | -0.90 | -0.92 | -0.11 | -0.80 | -0.92 | -0.00 | -0.69 | -0.50 | -0.38 | -0.76 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Denzler et al.** Information theoretic sensor data selection for active object recognition and state estimation. *IEEE Transactions on Pattern Analysis and Machine Intelligence,* 2002, vol. 24, 145-157
- **J. Vogel et al.** Target-directed attention: sequential decision-making for gaze-planning. *International Conference on Robotics Automation,* 2008
- **M. Chli et al.** Active matching. *European Conference on Computer Vision,* 2008
- **K. Deguchi et al.** An information theoretic approach for active and effective object recognitions. *International Conference on Pattern Recognition,* 2006, vol. 2, 622
- **R. Eidenberger et al.** Fast parametric viewpoint estimation for active object detection. *Proceedings of the IEEE International Conference on Multisensor Fusion and Integration for Intelligent systems,* 2008
- **Eidenberger et al.** Probabilistic action planning for active scene modelling in continuous high-dimensional domains. *Proceedings of the IEEE International Conference on Robotics and Automation,* 2009
- **Ercan et al.** Camera network node selection for target localization in the presence of occlusions. *SENSYS Workshop on Distributed Smart Cameras,* October 2006
- **Koostra et al.** Active exploration and keypoint clustering for object recognition. *IEEE,* 2008

- **P.-E. Forssen et al.** *Informed visual search: Combining attention and object recognition,* 2008, 935-942
- **O. Lanz.** Occlusion robust tracking of multiple objects. *International Conference on Computer Vision and Graphics,* 2004
- **T. Tamminen et al.** A bayesian occlusion model for sequential object matching. *Proceedings of the British Machine Vision Conference,* 2004, 547-556
- **Gupta et al.** An approach for camera selection and multi-object inference ordering in dynamic scenes. *Proceedings of the International Conference on Computer Vision,* 2007, 1-8
- **R. Eidenberger et al.** Probabilistic action planning for active scene modelling in continuous high-dimensional domains. *Proceedings of the IEEE International Conference on Robotics and Automation,* 2009
- **D.G. Lowe.** Object recognition from local scale-invariant features. *International Conference on Computer Vision,* 1999, 1150-1157
- **T. Grundmann et al.** Integration of 6d object localization and obstacle detection for collision free robotic manipulation. *Proceedings of the IEEE International Symposium on System Integration,* 2008
- **D. Marsh.** Applied Geometry for Computer Graphics and CAD. Springer, 2005
- **J. D. Foley et al.** Computer graphics: principles and practice. Addison-Wesley, 1996